(19) Europäisches Patentamt
European Patent Office
Office européen des brevets

(11) **EP 3 162 606 B1**

(12) **EUROPÄISCHE PATENTSCHRIFT**

(45) Veröffentlichungstag und Bekanntmachung des Hinweises auf die Patenterteilung:
**09.09.2020  Patentblatt 2020/37**

(51) Int Cl.:
**B60L 15/20** *(2006.01)*      **B62D 59/04** *(2006.01)*
**B60W 20/10** *(2016.01)*      **B60W 10/06** *(2006.01)*
**B60W 10/08** *(2006.01)*

(21) Anmeldenummer: **16160944.1**

(22) Anmeldetag: **17.03.2016**

(54) **VERFAHREN ZUR ANTRIEBSSTEUERUNG EINES ANHÄNGERS EINER ZUGFAHRZEUG-ANHÄNGER-KOMBINATION**

METHOD FOR CONTROLLING THE DRIVE OF A TRAILER OF A TRACTION VEHICLE   TRAILER COMBINATION

PROCEDE DE COMMANDE D'ENTRAINEMENT D'UNE REMORQUE D'UN COMBINE REMORQUE/VEHICULE DE TRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2015   EP 15191456**

(43) Veröffentlichungstag der Anmeldung:
**03.05.2017   Patentblatt 2017/18**

(73) Patentinhaber: **Deere & Company**
**Moline, IL 61265 (US)**

(72) Erfinder:
• **Gugel, Rainer**
**68723 Plankstadt (DE)**
• **Böhm, Barbara**
**69115 Heidelberg (DE)**
• **Fritz, Norbert**
**68549 Ilvesheim (DE)**
• **Wiedhage, Horst**
**67281 Kirchheim Wstr. (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 2 394 889       DE-A1- 10 131 935**
**DE-A1-102007 051 590     US-A1- 2014 278 696**

EP 3 162 606 B1

**Beschreibung**

Die Erfindung betrifft ein Verfahren zur Antriebssteuerung einer Antriebsachse am Anhänger einer Zugfahrzeug-Anhänger-Kombination. EP 2 394 889 A offenbart ein Verfahren, bei dem die Antriebskraft am Anhänger so gesteuert wird, dass die Zugkraft zwischen Zugfahrzeug und Anhänger minimiert wird.

DE 101 31 935 A offenbart die Steuerung des Antriebssystems vom Anhänger anhand von Signalen aus einem Lastsensor zwischen Zugmaschine und Anhänger sowie aus einem Gewichtssensor zum Erfassen des Gewichts des Anhängers.

Bei Zugfahrzeug-Anhänger-Kombinationen besteht oftmals die Herausforderung, definierte oder gesetzlich vorgegebene Gewichts-Grenzwerte einerseits nicht zu überschreiten, jedoch andererseits auch möglichst vollständig auszuschöpfen. In diesem Zusammenhang kann ein kleineres Zugfahrzeug verwendet werden. Hierbei entsteht jedoch der Nachteil, dass die für die Antriebsleistung relevanten Baugruppen wie Motor und Getriebe kleiner dimensioniert sind und nur eine entsprechend kleinere Antriebsleistung zur Verfügung gestellt werden kann. Außerdem besteht die Herausforderung, das vom Motor des Zugfahrzeugs zur Verfügung gestellte Antriebsmoment (bzw. Antriebsleistung) bei einem reduzierten Zugfahrzeug-Gewicht auch tatsächlich auf die Fahrbahn bzw. den Fahruntergrund, insbesondere bei schwierigen Fahrbedingungen im Feld, zu übertragen.

Der Erfindung liegt daher die Aufgabe zugrunde, die Leistungsdichte eines Zugfahrzeugs zu erhöhen.

Diese Aufgabe wird gemäß den Merkmalen des Patentanspruchs 1 gelöst.

Gemäß Patentanspruch 1 wird eine Soll-Antriebsleistung für mindestens eine Antriebsachse, vorzugsweise für mehrere Antriebsachsen, des Anhängers ermittelt. Dabei wird diese Soll-Antriebsleistung ermittelt

- in Abhängigkeit einer Verteilung von Aufstandskräften am Anhänger und am Zugfahrzeug, und

- in Abhängigkeit einer Zug-Antriebsleistung für das Zugfahrzeug.

Hierdurch kann eine proportionale Aufteilung der Antriebsleistungen zwischen dem Zugfahrzeug und der Antriebsachse (oder mehreren Antriebsachsen) des Anhängers erzielt werden. Insbesondere ist die Aufteilung der Antriebsleistungen proportional zu den Aufstandskräften, die einzelnen Antriebsachsen des Anhängers und dem Zugfahrzeug bzw. dessen Antriebsachsen zugeordnet sind.

Von der ermittelten Soll-Antriebsleistung für die Antriebsachse werden entsprechende Antriebs-Steuersignale abgeleitet und bereitgestellt. Diese Antriebs-Steuersignale können auf einfache Weise einen elektrischen Antrieb (z.B. eine Steuereinheit oder einen Elektromotor als Bestandteil dieses elektrischen Antriebs) der jeweiligen Antriebsachse des Anhängers ansteuern. Die elektrisch angetriebene Antriebsachse des Anhängers bietet - gegenüber mechanisch oder hydraulisch angetriebenen Antriebsachsen - den Vorteil, dass sie mittels der Antriebs-Steuersignale flexibel ansteuerbar ist. Dabei können die Antriebs-Steuersignale auch unter zusätzlicher Berücksichtigung unterschiedlicher Randbedingungen, definierter Kriterien und physikalischer Größen generiert werden, so dass die elektrisch angetriebene Anhänger-Achse abhängig von unterschiedlichen Fahr-, Nutzer- oder Umweltbedingungen entsprechend angepasst ansteuerbar ist.

Insgesamt ermöglicht das erfindungsgemäße Verfahren eine intelligente Aufteilung der Antriebsleistung auf das Zugfahrzeug und den Anhänger derart, dass Verluste der Antriebsleistung aufgrund von Radschlupf am Zugfahrzeug und/oder Anhänger reduziert werden. Die Steuersignale können derart bereitgestellt werden, dass an der Zugfahrzeug-Anhänger-Kombination ein Minimum an Antriebsleistungsverlust bzw. Radschlupf entsteht. Außerdem kann hierdurch ein auf den Fahruntergrund übertragbares Antriebsmoment bzw. eine übertragbare Antriebsleistung erzielt werden, welche für die Zugfahrzeug-Anhänger-Kombination ein Maximum darstellt.

Als Zug-Antriebsleistung des Zugfahrzeugs wird vorzugsweise die am Antriebsstrang des Zugfahrzeugs anstehende oder zur Verfügung stehende Antriebsleistung betrachtet. Die Zug-Antriebsleistung wird insbesondere auf der Basis der Motorleistung des Zugfahrzeugs ermittelt oder berechnet. Dabei können unterschiedliche Einflüsse berücksichtigt werden wie z.B. parasitäre Leistungsverluste und Leistungsverluste durch Verbraucher, insbesondere hydraulische und/oder elektrische Verbraucher (z.B. Haupthydraulikpumpe, Lichtmaschine, Hauptlüfter, Kompressor für Anhängerbremsung, Klimakompressor).

Die der elektrisch anzutreibenden Antriebsachse zugeordnete Aufstandskraft kann beispielsweise als Dateninformation an einem ohnehin vorhandenen Datenbus zur Verfügung stehen. Alternativ kann diese Aufstandskraft modellbasiert berechnet oder durch entsprechende Messungen ermittelt werden.

Vorzugsweise ist eine Steuereinheit vorgesehen, welche die erforderlichen Steuersignale zur Ansteuerung des elektrischen Antriebs der betreffenden Anhänger-Achse oder mehrerer AnhängerAchsen bereitstellt.

Der elektrische Strom für den elektrischen Antrieb der jeweiligen Antriebsachse des Anhängers wird vorzugsweise mittels eines Generatorgetriebes erzeugt, welches z.B. standardmäßig Bestandteil des Zugfahrzeugs ist (beispielsweise im Zusammenhang mit einer Zapfwelle) oder als separater Generator zur Verfügung gestellt wird. Der elektrische Antrieb enthält üblicherweise eine elektrische Maschine (insbesondere Elektromotor).

Da die betreffende Antriebsachse des Anhängers elektrisch angetrieben wird, kann die Soll-Antriebsleistung für diese Antriebsachse auch als elektrische Antriebsleistung bezeichnet werden.

Der Anhänger kann eine Radachse oder mehrere Radachsen aufweisen. Zumindest eine Radachse des Anhängers ist als eine elektrisch angetriebene Antriebsachse ausgebildet. Vorzugsweise sind mehrere Antriebsachsen oder sämtliche Antriebsachsen des Anhängers elektrisch angetrieben.

Der Anhänger ist vorzugsweise als Transportmittel zum Transport von Waren oder anderen Ladungen ausgebildet. Alternativ ist der Anhänger als ein Anbaugerät bzw. Arbeitsgerät ausgebildet, z.B. für den Einsatz in der Landwirtschaft oder im Straßenbau/- wartung.

Das Zugfahrzeug ist vorzugsweise ein industrielles Nutzfahrzeug oder ein landwirtschaftliches Nutzfahrzeug, insbesondere ein Traktor.

In einer bevorzugten Ausführungsform wird die Soll-Antriebsleistung für die jeweilige Antriebsachse des Anhängers durch mindestens folgende Schritte ermittelt:

- eine Zug-Antriebsleistung des Zugfahrzeugs wird ermittelt,
- eine die Aufstandskraft an der Antriebsachse des Anhängers repräsentierende Information wird bereitgestellt,
- eine die Summe der Aufstandskräfte an sämtlichen Antriebsachsen des Zugfahrzeugs repräsentierende Information wird bereitgestellt.

Die Soll-Antriebsleistung lässt sich dann mathematisch einfach aus der Gleichung

$$P\_ATj \; = \; P\_ZT \cdot \frac{F\_Aj}{F\_ZA}$$

ermitteln, wobei

- P_ATj die Soll-Antriebsleistung für die jeweilige elektrisch anzutreibende Anhänger-Achse ist,
- P_ZT die ermittelte Zug-Antriebsleistung des Zugfahrzeugs ist,
- F_Aj die Aufstandskraft an der jeweiligen elektrisch anzutreibenden Antriebsachse des Anhängers ist, und
- F_ZA die Summe der Aufstandskräfte am Zugfahrzeug ist.

Auf der Basis dieser Gleichung sind nur sehr wenige und verhältnismäßig einfach zu ermittelnde Informationen erforderlich, um die gewünschte Soll-Antriebsleistung P_ATj für die elektrisch angetriebene Anhänger-Achse zu ermitteln.

Abhängig von definierten Bedingungen kann eine Aufstandskraft einer Anhänger-Deichsel entweder den Aufstandskräften am Zugfahrzeug zugeordnet werden oder als eine Aufstandskraft an dem Anhänger betrachtet werden.

Die Summe der Aufstandskräfte an sämtlichen Antriebsachsen des Zugfahrzeugs (z.B. im Falle eines Allradantriebs bei zwei Fahrzeugachsen) wird ebenfalls in geeigneter Weise als Information bereitgestellt. Diese Information kann beispielsweise als Dateninformation an einem ohnehin vorhandenen Datenbus zur Verfügung stehen.

Alternativ können die Aufstandskräfte modellbasiert berechnet, rechnerisch abgeschätzt oder durch entsprechende Messungen ermittelt werden. Dabei können auch relevante Status-Informationen (z.B. Status des Allradantriebs) oder bekannte Eigengewichts-Daten des Zugfahrzeugs und/oder des Anhängers berücksichtigt werden. Eine Messung von Aufstandskräften erfolgt beispielsweise durch Druckmessungen an geeigneten Stellen des Zugfahrzeugs und des Anhängers (z.B. an der Vorderachsfederung des Zugfahrzeugs, an der Deichselfederung des Anhängers).

In einer bevorzugten Ausführungsform werden mehrere Antriebsachsen am Anhänger angesteuert werden derart,

- dass die Summe der einzelnen Soll-Antriebsleistungen für die einzelnen Antriebsachsen höchstens so groß ist wie eine zur Verfügung stehende elektrische Leistung, und
- dass das Verhältnis der einzelnen Soll-Antriebsleistungen für die einzelnen Antriebsachsen dem Verhältnis der diesen einzelnen Antriebsachsen zugeordneten Aufstandskräfte entspricht. Hierdurch wird gewährleistet, dass die ermittelten Soll-Antriebsleistungen für die einzelnen Antriebsachsen des Anhängers in einem proportionalen Verhältnis zueinander begrenzt bzw. reduziert werden, wenn die Summe der ermittelten Soll-Antriebsleistungen größer sein sollte als die momentan zur Verfügung stehende elektrische Antriebsleistung für den Anhänger. Diese zur Verfügung stehende elektrische Antriebsleistung kann abhängig von verschiedenen technischen Randbedingungen und Fahrbedingungen unterschiedlich sein.

Die Begrenzung der Soll-Antriebsleistung kann abhängig von spezifischen Fahrbedingungen auch dazu beitragen, den elektrischen Antrieb vor etwaigen Überlastungen bewahren und im Falle eines spezifischen Energieverteilungskonzeptes sicherstellen, dass gleichzeitig auch andere elektrische Verbraucher mit einer definierten elektrischen Leistung versorgt werden. Die Begrenzung der Soll-Antriebsleistung kann durch eine geeignete Verarbeitung der Antriebs-Steuersignale erzielt werden, welche den elektrischen Antrieb entsprechend ansteuern.

Vorzugsweise wird die höchstens zur Verfügung stehende Leistung für den elektrischen Antrieb automatisch durch ein zugfahrzeugseitiges und/oder anhängerseitiges Steuersystem definiert. Alternativ kann diese zur Verfügung stehende elektrische Antriebsleistung auch benutzerseitig vordefiniert bzw. aktualisiert werden.

In einer weiter bevorzugten Ausführung werden von den Antriebs-Steuersignalen geeignete Antriebsmoment-Steuersignale abgeleitet zur Steuerung eines Antriebsmoments an der elektrisch angetriebenen Antriebsachse des Anhängers. Diese Antriebsmoment-Steuersignale können vorteilhaft unter Berücksichtigung von Raddrehzahlen einzelner Räder des Zugfahrzeugs und/oder des Anhängers abgeleitet werden.

Die Antriebsmoment-Steuersignale werden insbesondere derart verarbeitet, dass sie den elektrischen Antrieb der Anhängerachse unter Einhaltung definierter fahrtechnischer Bedingungen ansteuern und somit zu einer antriebstechnisch effizienten und stabilen Fahrweise der Zugfahrzeug-Anhänger-Kombination beitragen. Diese Bedingungen definieren beispielsweise, dass

- ein maximal übertragbares Antriebsmoment an der Antriebsachse des Anhängers nicht überschritten wird, und/oder
- eine von der Gewichtskraft des Zugfahrzeugs abhängige maximale Antriebskraft für den Anhänger nicht überschritten wird, und/oder
- ein (z.B. von einem Benutzer oder von einer Steuereinheit) definierter Grenzwert einer maximalen Antriebskraft und/oder Antriebsleistung für den Anhänger nicht überschritten wird.

Zur Unterstützung einer stabilen Fahrweise des Anhängers werden vorzugsweise eine an den Antriebsrädern der Antriebsachse des Anhängers vorhandene Rad-Geschwindigkeit ermittelt und ein Geschwindigkeits-Grenzwert zur Begrenzung des Radschlupfes an diesen Antriebsrädern ermittelt. Die Steuersignale für den elektrischen Antrieb der Anhängerachse können dann in Abhängigkeit des ermittelten Geschwindigkeits-Grenzwertes bereitgestellt werden.

Die Soll-Antriebsleistung für die elektrisch anzutreibende Anhängerachse kann energiesparend auf ein fahrtechnisch stabiles Maß beschränkt werden, indem der elektrische Antrieb im Falle einer ansteigenden Rad-Geschwindigkeit an der Antriebsachse des Anhängers in Abhängigkeit des ermittelten Geschwindigkeits-Grenzwertes dieser Antriebsachs-Räder angesteuert wird, so dass bei erreichtem Geschwindigkeits-Grenzwert das Antriebsmoment an dieser Antriebsachse reduziert wird derart, dass ein weiterer Anstieg der Rad-Geschwindigkeit vermieden wird.

Die hier offenbarte Ansteuerung einer Antriebsachse ist unabhängig von einer spezifischen Anordnung dieser Antriebsachse am Anhänger und unabhängig von der Anzahl der elektrisch angetriebenen Achsen am Anhänger und auch unabhängig von der Gesamtanzahl aller Achsen des Anhängers. Dabei kann ein elektrischer Antrieb je Antriebsachse vorgehen sein. Alternativ kann ein elektrischer Antrieb auch mehrere Antriebsachsen des Anhängers antreiben.

Das gleiche Verfahrensprinzip mit einzelnen oder sämtlichen hier erläuterten Merkmalen kann auch bei einer Ansteuerung einer oder mehrerer elektrisch angetriebener Antriebsachsen des Zugfahrzeugs angewendet werden.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1 eine schematische Seitenansicht einer Zugfahrzeug-Anhänger-Kombination,

Fig. 2 eine schematische Darstellung einer Steuereinheit mit Steuersignalen für einen elektrischen Antrieb einer oder mehrerer elektrisch angetriebener Anhängerachse(n),

Fig. 3 ein Diagramm mit Darstellung eines Leistungsverlustes an dem Zugfahrzeug und dem Anhänger in Abhängigkeit der Antriebsleistung für den Anhänger,

Fig. 4 ein Diagramm mit Darstellung einer Gesamt-Antriebsleistung einer Zugfahrzeug-Anhänger-Kombination in Abhängigkeit einer Antriebsleistung für den Anhänger, und

Fig. 5 ein Diagramm mit Darstellung des Radschlupfes an einem Zugfahrzeug und einem Anhänger in Abhängigkeit der anteiligen Antriebsleistung für den Anhänger.

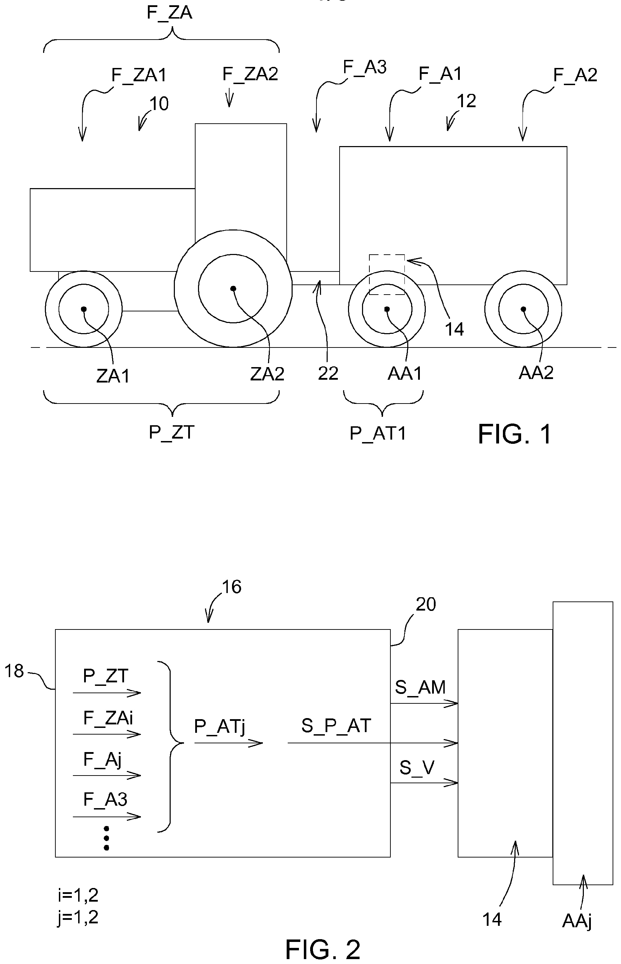

Fig. 1 zeigt eine schematische Darstellung einer Zugfahrzeug-Anhänger-Kombination in Form eines Traktors als Zugfahrzeug 10 und eines daran gekoppelten Anhängers 12. Das Zugfahrzeug 10 weist zwei Antriebsachsen auf, nämlich eine vordere Antriebsachse ZA1 und eine hintere Antriebsachse ZA2. Das Zugfahrzeug 10 weist folglich einen Allradantrieb auf. Hierbei wird vorzugsweise die hintere Antriebsachse ZA2 permanent angetrieben, während die vordere Antriebsachse ZA1 mit einem schaltbaren Antrieb verbunden ist und deshalb bedarfsweise angetrieben wird. Der ersten Antriebsachse ZA1 ist eine Aufstandskraft F_ZA1 und der zweiten Antriebsachse ZA2 ist eine Aufstandskraft F_ZA2 zugeordnet. Die Summe der Aufstandskräfte aller angetriebenen Achsen des Zugfahrzeugs 10 ist als F_ZA bezeichnet. Dem Zugfahrzeug 10 wird an seinem Antriebsstrang insgesamt eine Antriebsleistung P_ZT zur Verfügung gestellt. Diese Zug-Antriebsleistung P_ZT kann z.B. an der Antriebsachse ZA2 anliegen oder auf beide Antriebsachsen ZA1 und ZA2 verteilt werden.

Der Anhänger 12 weist eine elektrisch angetriebene Antriebsachse AA1 und eine zweite Anhängerachse AA2 auf. Für den elektrischen Antrieb der Antriebsachse AA1 steht ein elektrischer Antrieb 14 zur Verfügung. Der elektrische Antrieb 14 wird von einer in Fig. 2 schematisch dargestellten Steuereinheit 16 angesteuert, welche beispielsweise am Zugfahrzeug 10, am Anhänger 12 oder unmittelbar an dem elektrischen Antrieb 14 integriert ist. Der elektrisch angetriebenen Antriebsachse AA1 ist eine Aufstandskraft F_A1 und der zweiten Antriebsachse AA2 ist eine Aufstandskraft F_A2 zugeordnet. Weiterhin ist einer Anhänger-Deichsel 7 die Aufstandskraft F_A3 zugeordnet. Eine für die Antriebsachse AA1 ermittelte Soll-Antriebsleistung ist mit P_AT1 bezeichnet.

Gemäß Fig. 2 stehen der Steuereinheit 16 neben möglichen anderen Dateninformationen bzw. Eingangssignalen die Antriebsleistung P_ZT, die Aufstandskräfte F_ZAi (mit i = 1, 2) des Zugfahrzeugs 1 und von dem Anhänger 2 zumindest die Aufstandskräfte F_A1 und F_A3 zur Verfügung. Die Aufstandskräfte F_ZAi des Zugfahrzeugs 1 können alternativ bei speziellen Randbedingungen näherungsweise auch durch dessen Gewichtskraft ersetzt werden. Die Dateninformationen bzw. Eingangssignale stehen teilweise oder vollständig entweder bereits an einem Signaleingang 18 der Steuereinheit 16 zur Verfügung oder werden innerhalb der Steuereinheit 16 berechnet.

In der Steuereinheit 16 wird eine fahrtechnisch optimierte Soll-Antriebsleistung P_ATj für eine elektrisch angetriebene Antriebsachse AAj ermittelt. Im Beispiel gemäß Fig. 1 wird also eine Soll-Antriebsleistung P_AT1 für die Antriebsachse AA1 ermittelt. Von der ermittelten Soll-Antriebsleistung P_ATj werden entsprechende Antriebs-Steuersignale S_P_AT zur Ansteuerung des elektrischen Antriebs 14 durch Berechnung abgeleitet. Diese Antriebs-Steuersignale S_P_AT dienen entweder zur direkten Ansteuerung des elektrischen Antriebs 14 oder werden innerhalb der Steuereinheit 16 zunächst weiterverarbeitet. So können beispielsweise Antriebsmoment-Steuersignale S_AM von den Antriebs-Steuersignalen S_P_AT abgeleitet werden. Hierbei können Signale von verschiedenen Sensoren (z.B. Radgeschwindigkeit von angetriebenen und/oder nicht angetriebenen Rädern am Zugfahrzeug und/oder Anhänger, Fahrgeschwindigkeit des Zugfahrzeugs und/oder Anhängers, Deichsel-Winkel, Einschlag-Winkel der Zugfahrzeugräder, Krümmung der Zugfahrzeug-Bahn, GPS-Signale) am Zugfahrzeug 10 und/oder am Anhänger 12 berücksichtigt werden. Die Steuereinheit 16 kann an ihrem Ausgang 20 durch entsprechende Berechnung auch Geschwindigkeits-Steuersignale S_V für den elektrischen Antrieb 14 bereitstellen.

In der Steuereinheit 16 wird vorzugsweise auch ein Geschwindigkeits-Grenzwert zur Begrenzung des Radschlupfes an den Antriebsrädern der Antriebsachse AA1 ermittelt, so dass der elektrische Antrieb 14 in Abhängigkeit des ermittelten Geschwindigkeits-Grenzwertes angesteuert wird. Steigt die Rad-Geschwindigkeit an und wird der Geschwindigkeits-Grenzwert erreicht, reduziert die Steuereinheit 16 das Antriebsmoment mittels der Antriebsmoment-Steuersignale S_AM derart, dass ein weiterer Anstieg der Rad-Geschwindigkeit vermieden wird.

Das Verfahren ermöglicht eine proportionale Verteilung der Antriebsleistung zwischen dem Antriebsstrang des Zugfahrzeugs 10 und dem elektrischen Antrieb 14 des Anhängers 12 entsprechend des Verhältnisses der ermittelten Aufstandskräfte zueinander, insbesondere der Aufstandskräfte F_ZA, F_A1 und F_A3 zueinander. Eine Soll-Antriebsleistung P_ATj für eine elektrisch angetriebene Antriebsachse AAj wird auf der Basis der Überlegung ermittelt, dass sie möglichst proportional zu der Antriebsleistung P_ZT des Zugfahrzeugs 1 ist. Weiterhin ist die Soll-Antriebsleistung P_ATj möglichst proportional zu der Aufstandskraft F_Aj an der betrachteten Antriebsachse AAj zu dimensionieren. Diese Überlegung kommt in der Gleichung (1)

$$\frac{F\_Aj}{\sum\limits_{j} F\_Aj \; + \; F\_ZA} \; = \; \frac{P\_ATj}{\sum\limits_{j} P\_ATj \; + \; P\_ZT} \qquad (1)$$

zum Ausdruck. Die Summe der Aufstandskräfte F_Aj und die Summe der Soll-Antriebsleistungen P_ATj berücksichtigt, dass eine beliebige Anzahl elektrisch angetriebener Anhängerachsen AAj vorgesehen sein kann, so dass die Variable "j" einer beliebigen natürlichen Zahl entsprechen kann. Auf Basis des Beispiels gemäß Fig. 1 könnte in einer weiteren Ausführungsform auch die Anhängerachse AA2 elektrisch angetrieben sein (j = 1, 2). Außerdem kann in die Summe der Aufstandskräfte F_Aj an den elektrisch angetriebenen Anhängerachsen AAj auch die der Anhänger-Deichsel 7 zugeordnete Aufstandskraft F_A3 eingehen. Im rechten Teil der Gleichung (1) kann die Summe aus den Soll-Antriebsleistungen P_ATj und der Antriebsleistung P_ZT des Zugfahrzeugs 10 definiert bzw. ermittelt oder abgeschätzt werden, indem von einer Motorleistung des Zugfahrzeugs 10 ausgegangen wird und ermittelte oder geschätzte Verlustleistungen (z.B. durch im Getriebe, durch Verbraucher) am Zugfahrzeug 10 und/oder Anhänger 12 abgezogen werden.

Die Gleichung (1) kann für einen Algorithmus durch Gleichung (2) noch weiter vereinfacht werden, so dass keine weiteren Daten von anderen Achsen des Anhängers 12 benötigt werden:

$$\text{P\_ATj} \ = \ \text{P\_ZT} \cdot \frac{\text{F\_Aj}}{\text{F\_ZA}} \qquad\qquad (2)$$

Der elektrische Antrieb 14 kann in einer Ausführungsform lediglich einer Anhängerachse AAj, z.B. der Anhängerachse AA1, zugeordnet sein. In weiteren Ausführungsformen kann ein einziger elektrischer Antrieb 14 mehrere Anhängerachsen AAj antreiben.

Ein auf den vorgenannten Überlegungen basierendes Verfahren ermöglicht es, den Antriebsschlupf und einen entsprechenden Antriebsleistungsverlust an der Zugfahrzeug-Anhänger-Kombination zu reduzieren bzw. zu minimieren.

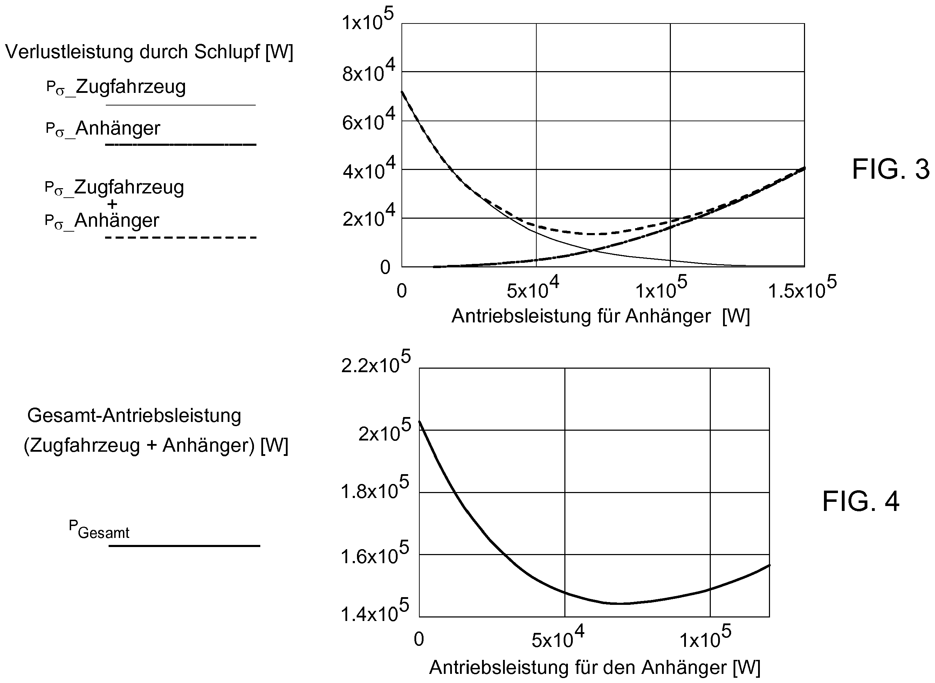

Das Diagramm gemäß Fig. 3 zeigt ein Beispiel für die Verlustleistung durch Schlupf am Zugfahrzeug 10 in Abhängigkeit der für den Anhänger 12 zur Verfügung gestellten Antriebsleistung. Der Schnittpunkt von Ordinate (y-Achse) und Abszisse (x-Achse) entspricht einem Zustand des Anhängers 12 ohne Antriebsleistung, d.h. der Anhänger 12 wird ausschließlich vom Zugfahrzeug 10 gezogen und nicht zusätzlich angetrieben. In diesem Zustand beträgt die Verlustleistung durch Schlupf etwa 72 kW für das Zugfahrzeug 10. Die gleiche Verlustleistung gilt für die Kombination aus Zugfahrzeug 10 und Anhänger 12. Mit zunehmender Antriebsleistung für den Anhänger 12 nimmt die Verlustleistung am Zugfahrzeug 10 ab. Die Verlustleistung des Anhängers 12 steigt mit zunehmender Antriebsleistung an seiner Antriebsachse AA1 bzw. seinen Antriebsachsen. Die Summe der Verlustleistungen des Zugfahrzeuges 10 und des Anhängers 12 ist durch die gestrichelte Kurve dargestellt, die ein absolutes Minimum bei einer bestimmten Verteilung der gesamten Antriebsleistung auf das Zugfahrzeug 10 und den Anhänger 12 erreicht. Folglich können etwa 60 kW Verlustleistung eingespart werden, wenn für den Anhänger 12 eine ermittelte Soll-Antriebsleistung zur Verfügung gestellt wird, welche entlang der Abszisse dem vorgenannten Minimum entspricht, also etwa 72 kW.

Durch die eingesparte Verlustleistung in Höhe von etwa 60 kW fällt bei dem Beispiel die erforderliche Gesamt-Antriebsleistung, d.h. für Zugfahrzeug 10 und Anhänger 12, von ca. 202 kW auf ca. 142 kW. Dies ist anhand der Ordinate des Diagramms gemäß Fig. 4 erkennbar. Die 142 kW entsprechen dabei einem absoluten Minimum der dargestellten Gesamt-Leistungsbilanzkurve. Diese Kurve zeigt wiederum, dass zur Minimierung der Verlustleistung durch Schlupf an der Zugfahrzeug-Anhänger-Kombination eine anteilige Antriebsleistung in Höhe von ca. 72 kW für den Anhänger 12 erforderlich ist. Das Zugfahrzeug 10 benötigt dann nur noch ca. 70 kW (= 142 kW - 72 kW) Antriebsleistung. Wie entlang der Ordinate erkennbar, würde dieselbe Zugfahrzeug-Anhänger-Kombination ohne jegliche Antriebsleistung für den Anhänger eine Antriebsleistung von 202 kW benötigen, die dann ausschließlich dem Zugfahrzeug 10 zugeordnet ist. Die Steuerungs-Strategie zur Minimierung der gesamten Verlustleistung durch einen zusätzlichen elektrischen Antrieb am Anhänger hingegen ermöglicht es, dass das Zugfahrzeug 10 nur noch mit ca. 70 kW angetrieben werden muss und somit ca. 132 kW (= 202 kW - 70 kW) Antriebsleistung für das Zugfahrzeug 10 eingespart werden können.

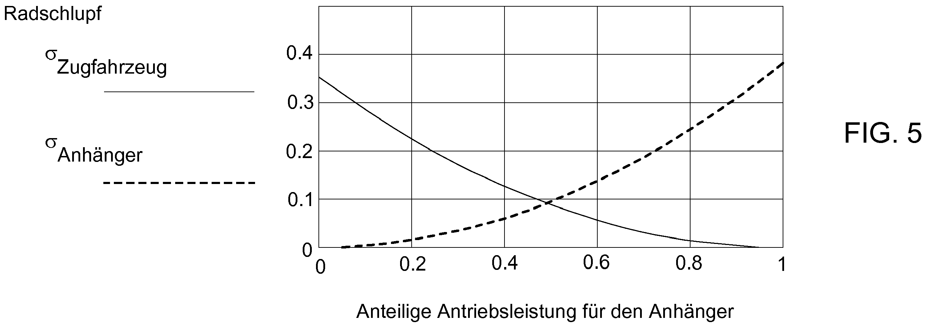

Das Diagramm gemäß Fig. 5 zeigt entlang der Abszisse die anteilige Antriebsleistung für den Anhänger 12. Der Anteil "0" bedeutet, dass keine Antriebsleistung für den Anhänger 12 zur Verfügung steht, der Anhänger wird dann nur gezogen. Der Anteil "1" bedeutet, dass eine Antriebsleistung nur am Anhänger 12 und nicht am Zugfahrzeug 10 zur Verfügung gestellt wird. Mit steigender anteiliger Antriebsleistung für den Anhänger 12 sinkt der Radschlupf am Zugfahrzeug 10 (durchgezogene Kurve) und nimmt der Radschlupf am Anhänger 12 zu (gestrichelte Kurve).

Wie bereits erwähnt, bietet das dargestellte Verfahren eine Steuerungs-Strategie zur Reduzierung bzw. Minimierung des Radschlupfes und somit auch der Verlustleistung an der Zugfahrzeug-Anhänger-Kombination. Gemäß einem Beispiel wird hierzu eine proportionale Aufteilung der gesamten Antriebsleistung auf das Zugfahrzeug und die Antriebsachse AA1 des Anhängers 12 vorgeschlagen.

Bei diesem Beispiel beträgt das Gewicht des Anhängers 12 etwa 32,8 Tonnen. Das Gewicht des Zugfahrzeugs 1 beträgt etwa 7,2 Tonnen. Der Zug bzw. die Zugfahrzeug-Anhänger-Kombination ist mit einer Geschwindigkeit von 10 km/h unterwegs, wobei das Zugfahrzeug 1 mit einem Allradantrieb ausgestattet ist. Die Aufstandskraft F_A1 an der angetriebenen Anhängerachse AA1 beträgt 10,3 Tonnen und die Aufstandskraft F_A3 an der Anhänger-Deichsel 7 ist 3,5 Tonnen. Somit gilt für die Kraft-Verhältnisse gemäß Gleichung (1):

10,3 t / (10,3 + 3,5 + 7,2)t = 0,49. Gemäß Gleichung (1) sollte deshalb proportional etwa 49% der gesamten Antriebsleistung der Zugfahrzeug-Anhänger-Kombination an der Antriebsachse AA1 des Anhängers 12 zur Verfügung gestellt werden.

Mit Hilfe des dargestellten Verfahrens können Anhänger 12 auch von solchen Zugfahrzeugen 10 fahrtechnisch stabil gezogen werden, die antriebstechnisch erheblich leichter dimensioniert sind und herkömmlich für das Ziehen dieses Anhängers nicht geeignet wären.

Es können Baueinheiten bzw. Module zur Leistungsverstärkung (z.B. Generatoren) effizient in Zugfahrzeuge integriert werden, welche aufgrund ihrer geringen Größe herkömmlich nur für relativ geringe Antriebskräfte bzw. Antriebsleistungen mit einem entsprechend "schwächeren" Antriebsmotor konzipiert sind. Das dargestellte Verfahren erlaubt es nun, dasselbe "schwächere" Zugfahrzeug mit einem leistungsstärkeren Antriebsmotor auszustatten und hierdurch zur Verfügung gestellte größere Antriebskräfte bzw. Antriebsmomente mittels des Zugfahrzeugs und des Anhängers auch auf die Fahrbahn übertragen zu können. Hierbei wird der leistungsstärkere Antriebsmotor des Zugfahrzeugs dazu verwendet, einen Teil seiner Leistung an einen Antrieb des Anhängers abzugeben.

Insbesondere wird ein Teil der Leistung des Antriebsmotors des Zugfahrzeugs an das vorgenannte Leistungsverstärkungs-Modul abgegeben, welches die vom Antriebsmotor aufgenommene mechanische Leistung in elektrische Leistung umwandeln kann und dann mindestens einem elektrischen Antrieb für eine oder mehrere elektrisch angetriebene Anhänger-Achse(n) zur Verfügung stellen kann.

**Patentansprüche**

1. Verfahren zur Antriebssteuerung mindestens einer Antriebsachse (AA1) am Anhänger (12) einer Zugfahrzeug-Anhänger-Kombination, mit folgenden Verfahrensschritten:

   a) Ermitteln einer Soll-Antriebsleistung (P_AT1) für die Antriebsachse (AA1) des Anhängers (12)

      - in Abhängigkeit einer Verteilung von Aufstandskräften (F_A1, F_A2, F_A3, F_ZA1, F_ZA2) am Anhänger (12) und am Zugfahrzeug (10), und
      - in Abhängigkeit einer Zug-Antriebsleistung (P_ZT) für das Zugfahrzeug (10), und

   b) Bereitstellen von Antriebs-Steuersignalen (S_P_AT, S_AM, S_V) zur Ansteuerung eines elektrischen Antriebs (14) der Antriebsachse (AA1) des Anhängers (12), wobei die Antriebs-Steuersignale (S_P_AT, S_AM, S_V) von der ermittelten Soll-Antriebsleistung (P_AT1) abgeleitet werden.

2. Verfahren nach Anspruch 1, **dadurch gekennzeichnet, dass**

   - eine Zug-Antriebsleistung (P_ZT) für das Zugfahrzeug (10) ermittelt wird,
   - eine die Aufstandskraft an der Antriebsachse (AA1) des Anhängers (12) repräsentierende Information (F_A1) bereitgestellt wird,
   - eine die Summe der Aufstandskräfte an sämtlichen Antriebsachsen (ZA1, ZA2) des Zugfahrzeugs (10) repräsentierende Information (F_ZA1, F_ZA2, F_ZA) bereitgestellt wird,
   - die Soll-Antriebsleistung (P_AT1) für die Antriebsachse (AA1) des Anhängers (12) aus dem Verhältnis

$$P\_ATj \ = \ P\_ZT \cdot \frac{F\_Aj}{F\_ZA}$$

   ermittelt wird, wobei

      - P_ATj die Soll-Antriebsleistung für die Antriebsachse (AAj) des Anhängers (2) ist,
      - P_ZT eine Zug-Antriebsleistung des Zugfahrzeugs (10) ist,
      - F_Aj eine die Aufstandskraft an der Antriebsachse (AAj) des Anhängers (12) repräsentierende Information ist, und
      - F_ZA eine die Summe der Aufstandskräfte (F_ZA1, F_ZA2) an sämtlichen Antriebsachsen (ZA1, ZA2) des Zugfahrzeugs (10) repräsentierende Information ist.

3. Verfahren nach Anspruch 1 oder 2, **dadurch gekennzeichnet,**
   **dass** mittels Antriebs-Steuersignale (S_P_AT) mehrere Antriebsachsen (AA1, AAj) am Anhänger (12) angesteuert werden derart,

      - **dass** die Summe der einzelnen Soll-Antriebsleistungen (P_AT1) für die einzelnen Antriebsachsen (AA1, AAj) höchstens so groß ist wie eine zur Verfügung stehende elektrische Leistung, und

- **dass** das Verhältnis der einzelnen Soll-Antriebsleistungen (P_AT1) für die einzelnen Antriebsachsen (AA1, AAj) dem Verhältnis der diesen einzelnen Antriebsachsen (AA1, AAj) zugeordneten Aufstandskräfte (F_A1, F_A2) entspricht.

4. Verfahren nach Anspruch 3, **dadurch gekennzeichnet, dass** die zur Verfügung stehende elektrische Leistung vordefiniert wird.

5. Verfahren nach einem der vorhergehenden Ansprüche, **dadurch gekennzeichnet, dass** von den Antriebs-Steuersignalen (S_P_AT) Antriebsmoment-Steuersignale (S_AM) abgeleitet werden zur Steuerung eines Antriebsmoments an der Antriebsachse (AA1) des Anhängers (12).

6. Verfahren nach Anspruch 5, **dadurch gekennzeichnet, dass** die Antriebsmoment-Steuersignale (S_AM) in Abhängigkeit von Raddrehzahlen einzelner Räder des Zugfahrzeugs (10) und/oder Anhängers (12) abgeleitet werden.

7. Verfahren nach Anspruch 5 oder 6, **dadurch gekennzeichnet, dass** die Antriebsmoment-Steuersignale (S_AM) derart verarbeitet werden, dass

   - ein maximal übertragbares Antriebsmoment an der Antriebsachse (AA1) des Anhängers (12) nicht überschritten wird, und/oder
   - eine von der Gewichtskraft des Zugfahrzeugs (10) abhängige maximale Antriebskraft für den Anhänger (12) nicht überschritten wird, und/oder
   - ein definierter Grenzwert einer maximalen Antriebsleistung und/oder Antriebskraft für den Anhänger (12) nicht überschritten wird.

8. Verfahren nach einem der vorhergehenden Ansprüche, **dadurch gekennzeichnet,**

   - **dass** eine den Antriebsrädern der Antriebsachse (AA1) des Anhängers (12) zugeordnete Rad-Geschwindigkeit ermittelt wird,
   - **dass** ein Geschwindigkeits-Grenzwert zur Begrenzung des Radschlupfes an diesen Antriebsrädern ermittelt wird, und
   - **dass** der elektrische Antrieb (14) dieser Antriebsachse (AA1) in Abhängigkeit des ermittelten Geschwindigkeits-Grenzwertes angesteuert wird.

9. Verfahren nach Anspruch 8, **dadurch gekennzeichnet,**

   - **dass** bei ansteigender Rad-Geschwindigkeit der elektrische Antrieb (14) der Antriebsachse (AA1) in Abhängigkeit von dem ermittelten Geschwindigkeits-Grenzwert angesteuert wird, und
   - **dass** bei erreichtem Geschwindigkeits-Grenzwert das Antriebsmoment an dieser Antriebsachse (AA1) reduziert wird derart, dass ein weiterer Anstieg der Rad-Geschwindigkeit vermieden wird.

10. Verfahren nach einem der vorhergehenden Ansprüche, **dadurch gekennzeichnet, dass** mittels des elektrischen Antriebs (14) mehrere Antriebsachsen (AA1, AA2, AAj) des Anhängers (12) angetrieben werden.

**Claims**

1. Method for controlling the drive of at least one drive axle (AA1) on the trailer (12) of a traction vehicle-trailer combination, comprising the following method steps:

   a) determining a setpoint drive power level (P_AT1) for the drive axle (AA1) of the trailer (12)

      - in accordance with a distribution of contact forces (F_A1, F_A2, F_A3, F_ZA1, F_ZA2) at the trailer (12) and at the traction vehicle (10), and
      - in accordance with a traction drive power level (P_ZT) for the traction vehicle (10), and

   b) making available drive control signals (S_P_AT, S_AM, S_V) for actuating an electric drive (14) of the drive axle (AA1) of the trailer (12), wherein the drive control signals (S_P_AT, S_AM, S_V) are derived from the determined setpoint drive power level (P_AT1).

2. Method according to Claim 1, **characterized in that**

- a traction drive power (P_ZT) is determined for the traction vehicle
- information (F_A1) which represents the contact force at the drive axle (AA1) of the trailer (12) is made available,
- information (F__ZA1, F_ZA2, F_ZA) which represents the sum of the contact forces at all the drive axles (ZA1, ZA2) of the traction vehicle (10) is made available, and
- the setpoint drive power level (P_AT1) for the drive axle (AA1) of the trailer (12) is determined from the ratio

$$P\_ATj \ = \ P\_ZT \cdot \frac{F\_Aj}{F\_ZA}$$

where

- P_ATj is the setpoint drive level for the drive axle (AAj) of the trailer (2),
- P_ZT is a traction drive power level of the traction vehicle (10),
- F_Aj is information which represents the contact force at the drive axle (AAj) of the trailer (12), and
- F_ZA is information which represents the sum of the contact forces (F_ZA1, F_ZA2) at all the drive axles (ZA1, ZA2) of the traction vehicle (10).

3. Method according to Claim 1 or 2, **characterized in that** a plurality of drive axles (AA1, AAj) on the trailer (12) are actuated by means of drive control signals (S_P_AT).

- **in that** the sum of the individual setpoint drive power levels (P_AT1) for the individual drive axles (AA1, AAj) is at most as high as an available electrical power level, and
- **in that** the ratio of the individual setpoint power levels (P_AT1) for the individual drive axles (AA1, AAj) corresponds to the ratio of the contact forces (F_A1, F_A2) which are assigned to these individual drive axles (AA1, AAj).

4. Method according to Claim 3, **characterized in that** the available electrical power is pre-defined.

5. Method according to one of the preceding claims, **characterized in that** drive torque control signals (S_AM) are derived from the drive control signals (S_P_AT) in order to control a drive torque at the drive axle (AA1) of the trailer (12).

6. Method according to Claim 5, **characterized in that** the drive torque control signals (S_AM) are derived in accordance with wheel rotational speeds of individual wheels of the traction vehicle (10) and/or trailer (12) .

7. Method according to Claim 5 or 6, **characterized in that** the drive torque control signals (S_AM) are processed in such a way that

- a maximum transmissible drive torque at the drive axle (AA1) of the trailer (12) is not exceeded, and/or
- a maximum drive force, dependent on the weight of the traction vehicle for the trailer (12) is not exceeded, and/or
- a defined limiting value of a maximum drive power level and/or drive force for the trailer (12) is not exceeded.

8. Method according to one of the preceding claims, **characterized**

- **in that** a wheel speed which is assigned to the drive wheels of the drive axle (AA1) of the trailer (12) is determined,
- **in that** a speed limiting value for limiting the wheel slip at these drive wheels is determined, and
- **in that** the electric drive (14) of this drive axle (AA1) is actuated in accordance with the determined speed limiting value.

9. Method according to Claim 8, **characterized**

- **in that** when the wheel speed is rising the electric drive (14) of the drive axle (AA1) is actuated in accordance with the determined speed limiting value, and
- **in that** when the speed limiting value is reached the drive torque at this drive axle (AA1) is reduced in such a way that a further rise in the wheel speed is avoided.

**10.** Method according to one of the preceding claims, **characterized in that** a plurality of drive axles (AA1, AA2, AAj) of the trailer (12) are driven by means of the electric drive (14).

**Revendications**

**1.** Procédé de commande d'entraînement d'au moins un essieu moteur (AA1) au niveau de la remorque (12) d'un combiné remorque-véhicule tracteur, comprenant les étapes de procédé suivantes :

a) détermination d'une puissance d'entraînement de consigne (P_AT1) pour l'essieu moteur (AA1) de la remorque (12)

- en fonction d'une distribution de forces d'appui (F_A1, F_A2, F_A3, F_ZA1, F_ZA2) au niveau de la remorque (12) et au niveau du véhicule tracteur et
- en fonction d'une puissance d'entraînement de traction (P_ZT) pour le véhicule tracteur (10), et

b) fourniture de signaux de commande d'entraînement (S_P_AT, S_AM, S_V) pour la commande d'un entraînement électrique (14) de l'essieu moteur (AA1) de la remorque (12), les signaux de commande d'entraînement (S_P_AT, S_AM, S_V) étant dérivés de la puissance d'entraînement de consigne déterminée (P_AT1).

**2.** Procédé selon la revendication 1, **caractérisé en ce que**

- une puissance d'entraînement de traction (P_ZT) pour le véhicule tracteur (10) est déterminée,
- une information (F_A1) représentant la force d'appui au niveau de l'essieu moteur (AA1) de la remorque (12) est fournie,
- une information (F_ZA1, F_ZA2, F_ZA) représentant la somme des forces d'appui au niveau de tous les essieux moteurs (ZA1, ZA2) du véhicule tracteur (10) est fournie,
- la puissance d'entraînement de consigne (P_AT1) pour l'essieu moteur (AA1) de la remorque (12) est déterminée à partir du rapport

$$P\_ATj \ = \ P\_ZT \cdot \frac{F\_Aj}{F\_ZA}$$

- P_ATj étant la puissance d'entraînement de consigne pour l'essieu moteur (AAj) de la remorque (2),
- P_ZT étant une puissance d'entraînement de traction du véhicule tracteur
- F_Aj étant une information représentant la force d'appui au niveau de l'essieu moteur (AAj) de la remorque (12), et
- F_ZA étant une information représentant la somme des forces d'appui (F_ZA1, F_ZA2) au niveau de tous les essieux moteurs (ZA1, ZA2) du véhicule tracteur (10).

**3.** Procédé selon la revendication 1 ou 2, **caractérisé en ce qu'**au moyen de signaux de commande d'entraînement (S_P_AT), plusieurs essieux moteurs (AA1, AAj) au niveau de la remorque (12) sont commandés, de telle sorte

- que la somme des puissances d'entraînement de consigne individuelles (P_AT1) pour les essieux moteurs individuels (AA1, AAj) soit tout au plus égale à une puissance électrique disponible, et
- que le rapport des puissances d'entraînement de consigne individuelles (P_AT1) pour les essieux moteurs individuels (AA1, AAj) corresponde au rapport des forces d'appui (F_A1, F_A2) associées à ces essieux moteurs individuels (AA1, AAj).

**4.** Procédé selon la revendication 3, **caractérisé en ce que** la puissance électrique disponible est prédéfinie.

**5.** Procédé selon l'une quelconque des revendications précédentes, **caractérisé en ce que** des signaux de commande de couple d'entraînement (S_AM) sont dérivés des signaux de commande d'entraînement (S_P_AT) pour commander un couple d'entraînement au niveau de l'essieu moteur (AA1) de la remorque (12).

**6.** Procédé selon la revendication 5, **caractérisé en ce que** les signaux de commande de couple d'entraînement (S_AM) sont dérivés en fonction de vitesses de rotation de roue de roues individuelles du véhicule tracteur (10) et/ou de la remorque (12).

7. Procédé selon la revendication 5 ou 6, **caractérisé en ce que** les signaux de commande de couple d'entraînement (S_AM) sont traités de telle sorte

   - qu'un couple d'entraînement maximal transmissible au niveau de l'essieu moteur (AA1) de la remorque (12) ne soit pas dépassé, et/ou
   - qu'une force d'entraînement maximale de la remorque (12), dépendant de la force pondérale du véhicule tracteur (10), ne soit pas dépassée, et/ou
   - qu'une valeur limite définie d'une puissance d'entraînement maximale et/ou d'une force d'entraînement maximale de la remorque (12) ne soit pas dépassée.

8. Procédé selon l'une quelconque des revendications précédentes, **caractérisé en ce**

   - **qu'**une vitesse de roue associée aux roues motrices de l'essieu moteur (AA1) de la remorque (12) est déterminée,
   - **qu'**une valeur limite de vitesse pour limiter le patinage des roues au niveau de ces roues motrices est déterminée, et
   - **que** l'entraînement électrique (14) de cet essieu moteur (AA1) est commandé en fonction de la valeur limite de vitesse déterminée.

9. Procédé selon la revendication 8, **caractérisé en ce que**

   - dans le cas d'une augmentation de la vitesse des roues, l'entraînement électrique (14) de l'essieu moteur (AA1) est commandé en fonction de la valeur limite de vitesse déterminée, et
   - dans le cas où la valeur limite de vitesse est atteinte, le couple d'entraînement au niveau de cet essieu moteur (AA1) est réduit de telle sorte qu'une augmentation supplémentaire de la vitesse des roues soit évitée.

10. Procédé selon l'une quelconque des revendications précédentes, **caractérisé en ce qu'**au moyen de l'entraînement électrique (14), plusieurs essieux moteurs (AA1, AA2, AAj) de la remorque (12) sont entraînés.

F_ZA

F_ZA1    F_ZA2    F_A3    F_A1    F_A2

10    12

ZA1    ZA2    22    AA1    14    AA2

P_ZT    P_AT1    FIG. 1

16    20

18

P_ZT

F_ZAi    P_ATj    S_P_AT    S_AM

F_Aj    S_V

F_A3

i=1,2
j=1,2    14    AAj

FIG. 2

Verlustleistung durch Schlupf [W]

$P_\sigma$_Zugfahrzeug

_____

$P_\sigma$_Anhänger

— — — — —

$P_\sigma$_Zugfahrzeug
+
$P_\sigma$_Anhänger

- - - - - - - - - -

FIG. 3

Antriebsleistung für Anhänger  [W]

Gesamt-Antriebsleistung

(Zugfahrzeug + Anhänger) [W]

$P_{Gesamt}$

_____

FIG. 4

Antriebsleistung für den Anhänger [W]

EP 3 162 606 B1

Radschlupf

$\sigma_{Zugfahrzeug}$

_____

$\sigma_{Anhänger}$

- - - - - - - - - - -

Anteilige Antriebsleistung für den Anhänger

FIG. 5

EP 3 162 606 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2394889 A

- DE 10131935 A